Europäisches Patentamt

European Patent Office

Office européen des brevets

(19)

(11) EP 0 779 095 A1

(12) EUROPÄISCHE PATENTANMELDUNG

(43) Veröffentlichungstag:
18.06.1997 Patentblatt 1997/25

(51) Int. Cl.⁶: **B01D 53/94**, B01J 23/00

(21) Anmeldenummer: 96117579.1

(22) Anmeldetag: 02.11.1996

(84) Benannte Vertragsstaaten:
**BE DE FR GB IT**

(30) Priorität: **13.12.1995 DE 19546484**

(71) Anmelder:
• **DAIMLER-BENZ AKTIENGESELLSCHAFT**
 **70567 Stuttgart (DE)**
• **BASF AKTIENGESELLSCHAFT**
 **67056 Ludwigshafen (DE)**

(72) Erfinder:
• **Hartweg, Martin, Dr.**
 **89153 Erbach (DE)**
• **Roitzheim, Rolf-Dirc, Dr.**
 **89160 Dornstadt (DE)**
• **Seibold, Andrea**
 **89134 Blaustein (DE)**
• **Walz, Leonhard, Dr.**
 **76437 Rastatt (DE)**
• **Fetzer, Thomas, Dr.**
 **67346 Speyer (DE)**
• **Morsbach, Bernd**
 **67069 Ludwigshafen (DE)**

(54) **Verfahren und Anlage zur katalytischen Gasreinigung**

(57) Die Erfindung betrifft ein Verfahren zum Betreiben einer Reinigungsanlage für Gase, insbesondere für Abgase von stöchiometrisch betriebenen Ottomotoren, bei welchem Verfahren ein einen Katalysator aufweisender Filterkörper dem Gasstrom ausgesetzt und Schadstoffe katalytisch umgesetzt werden. Zur Verbesserung der Schadstoffemission in der Startphase wird bei Temperaturen unterhalb einer Ansprechtemperatur der Reinigungsanlage, insbesondere unterhalb 200 °C, bevorzugt unterhalb 150 °C, im Gas vorliegende Kohlenwasserstoffe vom Filterkörper zumindest teilweise zwischengespeichert und diese oberhalb der Ansprechtemperatur wieder freigesetzt und Schadstoffe unter Zuhilfenahme des Trägermaterials des Filterkörpers katalytisch umgewandelt..

EP 0 779 095 A1

**Beschreibung**

Die Erfindung betrifft ein Verfahren zum Betreiben einer Reinigungsanlage für Gase gemäß dem Oberbegriff des Anspruchs 1 sowie eine Reinigungsanlage für Gase gemäß dem Oberbegriff des Anspruchs 6, wie beides in der Automobilindustrie verwendet und hier als bekannt unterstellt wird.

Zur Verbesserung der Kaltlaufeigenschaften und insbesondere zur Reduktion der Kohlenwasserstoffemission in Abgasen von Fahrzeugen mit geregeltem Abgaskatalysator wird dieser bislang in der Startphase beheizt. Dies stellt einen zusätzlichen Energiebedarf und eine Gewichtserhöhung dar. Des weiteren sind derartige Reinigungsanlagen aufgrund der notwendigen Katalysatoren wie Edelmetalle und dgl. zusätzlich noch teuer und schwer zu recyclen.

Aus der nicht vorveröffentlichten DE-P 44 20 932.0-41 ist ein Katalysator einer Reinigungsanlage für Abgase bekannt, der aus einem Spinell oder einer spinellartigen Zusammensetzung gebildet ist. Der Katalysator ist insbesondere für mager betriebene Ottomotoren und/oder für Dieselmotoren vorgesehen. Er weist u.a. eine hohe Beständigkeit gegen im Abgas vorliegende Substanzen auf. Ferner wirkt er hinsichtlich CO und Kohlenwasserstoffen oxidierend und hinsichtlich NOx, insbesondere NO und $NO_2$ reduzierend.

Die Aufgabe der Erfindung ist es, das gattungsgemäß Verfahren sowie die zugrundegelegte Reinigungsanlage dahingehend zu verbessern, daß zumindest die Reinigungswirkung während der Startphase verbessert ist.

Die Aufgabe wird bei einem zugrundegelegten Verfahren erfindungsgemäß mit den kennzeichnenden Verfahrensschritten des Anspruchs 1 bzw. bzgl. der zugrundegelegten Reinigungsanlage erfindungsgemäß mit den kennzeichnenden Merkmalen des Anspruch 6 gelöst. Durch den Einsatz eines katalytisch wirksamen Trägermaterials, das bei Temperaturen unterhalb der katalytischen Ansprechtemperatur der Reinigungsanlage - also bei der Temperatur, bei der die katalytische Reduktion und/oder Oxidation von Schadstoffen, insbesondere die katalytische Reduktion von NOx und ebenfalls insbesondere die katalytische Oxidation von CO, erfolgt - gleichzeitig als Speichermedium für die Kohlenwasserstoffe wirkt, kann zumindest auf die Beheizung des Katalysators in der Startphase verzichtet werden. Ferner kann der im Abgas vorliegende Kohlenwasserstoff gleichzeitig als Reduktionsmittel für die Stickoxide, insbesondere für NO und $NO_2$ verwendet werden, wodurch auch dessen Anteil im Abgas gesenkt werden kann. Des weiteren ist durch die katalytische Wirkung des Trägermaterials der Bedarf an teuren Katalysatoren wie Edelmetall, seltene Erden, Lanthaniden und dgl. zumindest verringert, wodurch die Reinigungsanlage preiswerter gestaltet werden.

Weitere sinnvolle Ausgestaltungen der Erfindung sind den Unteransprüchen entnehmbar. Des weiteren wird die Erfindung anhand von in Figuren dargestellten Ausführungsbeispielen näher erläutert. Dabei zeigt

Fig. 1     eine Reinigungsanlage mit porösem und aus dem Katalysator gefertigten sowie einen Beigabekanal für ein Reduktionsmittel aufweisenden Filterkörper,

Fig. 2     eine Reinigungsanlage mit einer vor dem Filterkörper angeordneten Zuführeinrichtung für das Reduktionsmittel,

Fig. 3     eine Reinigungsanlage mit einer Ringdüsen aufweisenden Zuführeinrichtung für das Reduktionsmittel und

Fig. 4     ein NOx/$CO_2$-Diagramm als Funktion der Temperatur eines $CuAl_2O_4$-spinellhaltigen Katalysators,

Fig. 5     ein Diagramm einer NOx(NO)-Reduktion und CO-Oxidation über der Temperatur bei einem ein $Mg_{0.5}Cu_{0.5}Al_2O_4$- spinellhaltigen Katalysators,

Fig. 6     ein Diagramm einer NOx(NO)-Reduktion über der Temperatur bei einem 20 % ZnO, 16% CuO und 64 % $Al_2O_3$-haltigen Katalysators, der eine Spinell-Struktur aufweist und zusätzlich mit 1,6 Gew.-% $CeO_2$ imprägniert ist,

Fig. 7     ein Diagramm einer NOx(NO)-Reduktion über der Temperatur bei einem 20 % ZnO, 16% CuO und 64 % $Al_2O_3$-haltigen Katalysators, der eine Spinell-Struktur aufweist und zusätzlich mit 8 Gew.-% $CeO_2$ imprägniert ist,

Fig. 8     ein Diagramm einer NOx(NO)-Reduktion über der Temperatur bei einem 20 % ZnO, 16% CuO und 64 % $Al_2O_3$-haltigen Katalysators, der eine Spinell-Struktur aufweist und zusätzlich mit einem $WO_3$, $V_2O_5$ und $TiO_2$-haltigen Festkörper vermischt ist,

Fig. 9     ein Diagramm einer NOx(NO)-Reduktion über der Temperatur bei einem 20 % ZnO, 16% CuO und 64 % $Al_2O_3$-haltigen Katalysators, der eine Spinell-Struktur aufweist und zusätzlich 0,1 Gew.-% Vanadium aufweist und

Fig. 10     ein Diagramm einer NOx(NO)-Reduktion über der Temperatur bei einem 20 % ZnO, 16% CuO und 64 % $Al_2O_3$-haltigen Katalysators, der eine Spinell-Struktur aufweist und zusätzlich 0.5 Gew.-% Palladium aufweist.

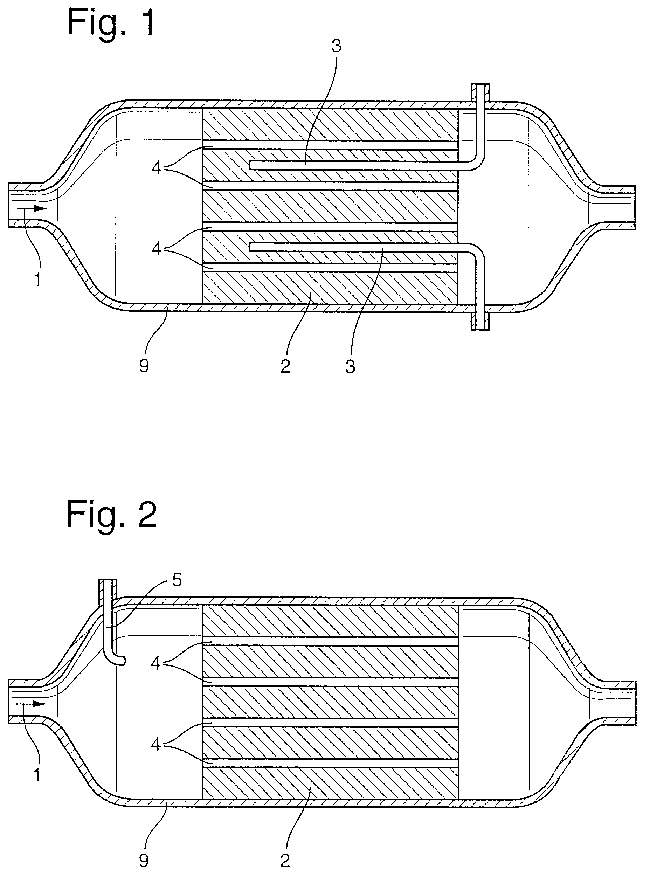

In Figur 1 ist eine Reinigungsanlage dargestellt, deren Filterkörper 2 in einem Auspuffstrang 9 eines benzingetriebenen Ottomotors, insbesondere von einem Personenkraftwagen eingebaut ist. Der poröse Filterkörper 2 weist Durchstromkanäle 4 auf, durch die das zu reinigende Abgas hindurchströmt und die hier zur besseren Veranschaulichung als geradlinige Kanäle dargestellt sind.

Das durch einen Durchströmkanal 4 hindurchströmende Abgas weist u.a. Kohlenwasserstoffe auf, die als Reduktionsmittel für die ebenfalls im Abgas vorliegenden Stickoxide und hierbei insbesondere von NO und $NO_2$ dienen. Nach einer bestimmten Behandlungsstrecke sind die Kohlenwasserstoffe jedoch verbraucht, so daß der Filterkörper 2 hinsichtlich seiner katalytischen Wirkung auf die Schadstoffe gesättigt ist.

Damit innerhalb des Filterkörpers 2 der Reinigungsanlage eine weitere Reduktion der Schadstoffe möglich ist, weist der aus dem Katalysator gefertigte Filterkörper 2 zwischen zwei Durchströmkanälen 4 einen Beigabekanal 3 einer Zuführeinrichtung für das Reduktionsmittel auf. Der Beigabekanal 3 ist mit einem nicht dargestellten Reservoir der Zuführeinrichtung verbunden. Zweckmäßigerweise ist der Beigabekanal 3 über geeignete Sicherheitsmaßnahmen mit der Tankentlüftung des Kraftfahrzeugs verbunden, so daß der insbesondere der Gasraum des Tanks das Reservoir bildet.

Der sacklochartige Beigabekanal 3 ist - in Strömungsrichtung 1 des Abgases betrachtet - gaszuströmseitig verschlossen und gasabströmseitig mit dem Reservoir verbunden. Als günstige Reduktionsmittel haben sich Ammoniak und für den Gebrauch in Kraftfahrzeugen insbesondere Kohlenwasserstoffe bewährt.

Zur Zuführung von Reduziermittel strömt das Reduktionsmittel gasabströmseitig ein, und diffundiert durch den porösen und kapillarwirsamen Filterkörper 2 in die Durchströmkanäle 4 und verdampft dort, wodurch in dem bereits teilgereinigten Abgas die Konzentration des Reduziermittels erhöht wird.

Die innerhalb des Filterkörpers 2 stattfindende Erhöhung der Konzentration der Kohlenwasserstoffe bewirkt, daß die in dem vorgereinigten Abgas verbleibenden Schadstoffe während der weiteren Durchströmung des Abgases durch den Filterkörper 2 hindurch weiter reduziert werden, wodurch das Abgas in der gesamten Reinigungsanlage besser gereinigt wird. Die Schadstoffverringerung kann in vorteilhafter Weise auch hinsichtlich der Konzentration an Kohlenmonoxid und/oder an Kohlenwasserstoffen des Abgases erfolgen.

Damit die Menge des zugeführten Reduktionsmittels nicht zu groß ist, weist die Zuführeinrichtung sinnvollerweise noch eine Dosiereinrichtung ( nicht eingezeichnet ), bspw. eine volumetrische Pumpe auf, so daß die Beigabe an Reduktionsmittel exakt dosiert werden kann.

Der Beigabekanal 3 kann auch vom Außenumfang des Filterkörpers 2 beginnend quer zur Strömungsrichtung 1 des Abgases bis hin zur Mitte des Filterkörpers 2 eingebracht sein. Dieses nicht dargestellte Ausführungsbeispiel hat den Vorteil, daß mit einem einzigen Beigabekanal 3 mehrere Durchströmkanäle 4 gleichzeitig mit dem Reduziermittel beaufschlagt werden können. Des weiteren ist es hier günstig, daß der oder die Beigabekanäle 3 in einfacher Weise vom Außenumfang des Filterkörpers 2 her mit dem Reduziermittel versorgt werden können.

Bei einem porös ausgebildeten Filterkörper 2 kann in bevorzugter Weise die Zuführeinrichtung umfangsseitig am Filterkörper 2 angeordnete Düsen, insbesondere eine Ringdüse 6 aufweisen, durch die das Reduktionsmittel, bevorzugt quer zur Strömungsrichtung 1 des Angases durch den Filterkörper 2 hindurch, ausströmbar ist. Der Transport des vorzugsweise gasförmigen Reduziermittels in Richtung des durch die Poren des porösen Filterkörpers 2 hindurchströmenden Abgases erfolgt ebenfalls durch die Poren des Filterkörpers 2 hindurch.

Die Beigabe des Reduziermittels erfolgt zweckmäßigerweise nach einer Behandlungsstrecke, die einer Sättigungslänge des Filterkörpers 2 entspricht, wobei die Sättigungslänge derjenigen von dem Gas durchströmten Strecke entspricht, nach der - in Strömungsrichtung 1 betrachtet - im Katalysator des Filterkörpers 2 eine Sättigung der Schadstoffverringerung, insbesondere der Reduktion von Stickoxiden eintritt.

In der Figur 2 ist einen weitere Reinigungsanlage dargestellt, deren Filterkörper 2 ebenfalls in dem Auspuffstrang 9 einer Brennkraftmaschine, insbesondere eines Benzingetriebenen Ottomotors oder eines mager betriebenen Ottomotors angeordnet ist. Um überflüssige Wiederholungen zu vermeiden, wird im folgenden jedoch nur noch auf die Unterschiede zwischen diesem Ausführungsbeispiel und demjenigen nach der Figur 1 eingegangen.

In dem Ausführungsbeispiel nach Figur 2 weist die Zuführeinrichtung eine gaszuströmseitig vor dem von dem Abgas durchströmbaren Filterkörper 2 angeordnete Zerstäuberdüse 5 auf, die zum Zerstäuben des Reduziermittels vorgesehen ist. Die Zerstäuberdüse 5 ist derart bemessen, daß das Reduziermittel in Tropfen einer solchen Größe zerstäubt wird, daß ein Tropfen erst nach einer bestimmten Eindringtiefe in den Filterkörper 2, die vorzugsweise mindestens der Sättigungslänge entspricht, in dem Filterkörper 2 vollständig verdampft ist. Eine derartige Tropfengröße kann bspw. empirisch ermittelt werden. Die erneute Zugabe des Reduktionsmittels innerhalb des Filterkörpers 2 erfolgt damit durch die Verdampfung der Tropfen innerhalb des Filterkörpers 2.

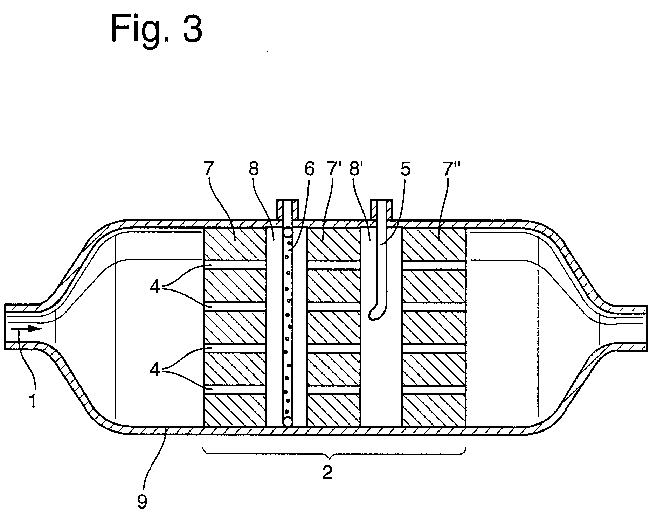

In Figur 3 ist ein weiteres Ausführungsbeispiel einer Reinigungsanlage dargestellt, wobei auch hier zur Vermeidung von überflüssigen Wiederholungen, nur auf die Unterschiede zwischen diesem Ausführungsbeispiel und denjenigen nach den Figuren 1 und 2 eingegangen wird.

In dem Ausführungsbeispiel gemäß Figur 3 ist der Filterkörper 2 in der Art einer Filterkaskade dreigeteilt ausgebildet. Die von dem Abgas durchströmbaren und porös ausgebildeten Teilkörper 7, 7', 7" des Filterkörpers 2 sind räumlich voneinander beabstandet und in Strömungsrichtung 1 des Abgases hintereinander angeordnet. Die in Strömungsrichtung 1 gemessene Länge eines Teilkörpers 7, 7', 7" entspricht sinnvollerweise der Sättigungslänge des Katalysators des Filterkörpers 2.

In den zwischen den Teilkörpern 7, 7', 7" des Filterkörpers 2 angeordneten Zwischenräumen 8, 8' sind Düsen 5 und 6 angeordnet, die der Zuführeinrichtung zugeordnet sind. Aus den Düsen - in dem ersten Zwischenraum eine randseitig angeordnete und radial nach innen ausströmende Ringdüse 6 und in dem zweiten Zwischenraum 8' 8 eine mittig angeordnete Zerstäuberdüse 5, strömt das Reduktionsmittel in den jeweiligen Zwischenraum 8, 8' ein und vermischt sich mit dem bereits teilgereinigten Abgas. Ein Zwischenraum 8, 8' kann daher als eine Art Mischkammer aufgefaßt werden. Das in einem Zwischenraum 8, 8' mit Reduktionsmittel angereicherte Abgas wird dann dem nächsten Teilkörper 7' bzw. 7" zur weiteren Verringerung von Schadstoffen zugeführt.

In allen Ausführungsbeispielen ist der Katalysator sinnvollerweise ein spinellhaltiger Festkörper, wobei unter Spinellen ein Material der allgemeinen chemischen Formel $A_aB_bO_4$ zu verstehen ist, das zumindest mikroskopisch eine kristallographische oder kristallähnliche kubische Gitterstruktur mit flächenzentriert angeordneten Sauerstoffionen und tetraedrischen und oktaedrischen Lücken aufweist, in welchen tetraedrischen Lücken die A-Teilchen und bis zu 50% der B-Teilchen und in welchen oktaedrischen Lücken die restlichen B-Teilchen angeordnet sind. Hier bezeichnet ein A- bzw. B-Teilchen nur deren kristallographische Anordnung. Im Sinne der Erfindung sind als Spinelle auch unterstöchiometrische Verbindungen anzusehen, bei denen das $B_bO_3$ als Matrix fungiert und die im Röntgenspektrum die charakteristischen Spinellinien aufweisen, wobei der Spinell der formalen Zusammensetzung $A_aB_bO_4$ in einer $B_bO_3$ Matrix vorliegt, so daß sich formal eine Stöchiometrie von $A_a(1-x)B_bO_4$ ergibt. In stofflicher Hinsicht können die A-, wie auch die B-Teilchen unterschiedlich zueinander sein.

In dem Spinell ist das A-Teilchen eines oder mehrere der Elemente der A-Gruppe der Mg, Ca, Mn, Fe, Ni, Co Cu, Zn, Sn und Ti und das B-Teilchen eines oder mehrere Elemente der B-Gruppe Al, Ga, In, Co, Fe, Cr, Mn, Cu, Zn, Sn, Ti und Ni. Allerdings ist zu beachten, daß keines der Elemente der Ausschlußgruppe Mn, Fe und Co gleichzeitig ein A- und ein B-Teilchen sein kann.

Als besonders zweckmäßig haben sich hier bei folgende zumindest spinellartige Zusammensetzungen erwiesen: $(MgCu)Al_2O_4$, $(CuCu)Al_2O_4$, $(CuZn)Al_2O_4$, $(CoZn)CuAl_2O_4$, Gemische aus $(ZnCu)Al_2O_4$ mit $WO_3$ und/oder $V_2O_5$ und/oder $TiO_2$ und hierbei insbesondere in der Zusammensetzung $Mg_{0.5}Cu_{0.5}Al_2O_4$, $Cu_{0.5}Cu_{0.5}Al_2O_4$, $Cu_{0.5}Zn_{0.5}Al_2O_4$, $Co_{0.25}Zn_{0.25}Cu_{0.5}Al_2O_4$, oder deren Gemische mit 10% $WO_3$ und 6% $V_2O_5$ und/oder

84% $TiO_2$ und/oder $Al_2O_3$.

Des weiteren hat es sich als günstig erwiesen, diese Spinelle mit katalytisch aktiven Elementen Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide zu versehen.

Auf einige dieser eben genannten Materialien bzw. deren Kombinationen wird beispielhaft in den nachfolgenden Beispielen genauer eingegangen.

Beispiel 1)

Als Spinell wird ein mit Kupfer imprägnierter Kupfer/Aluminium-Spinell, insbesondere der Zusammensetzung $Cu_{0.5}Cu_{0.5}Al_2O_4$ verwandt. Die Herstellung des Spinells erfolgt mit einem Verfahren, wie es aus der DE 43 01 4709 A1 bekannt ist.

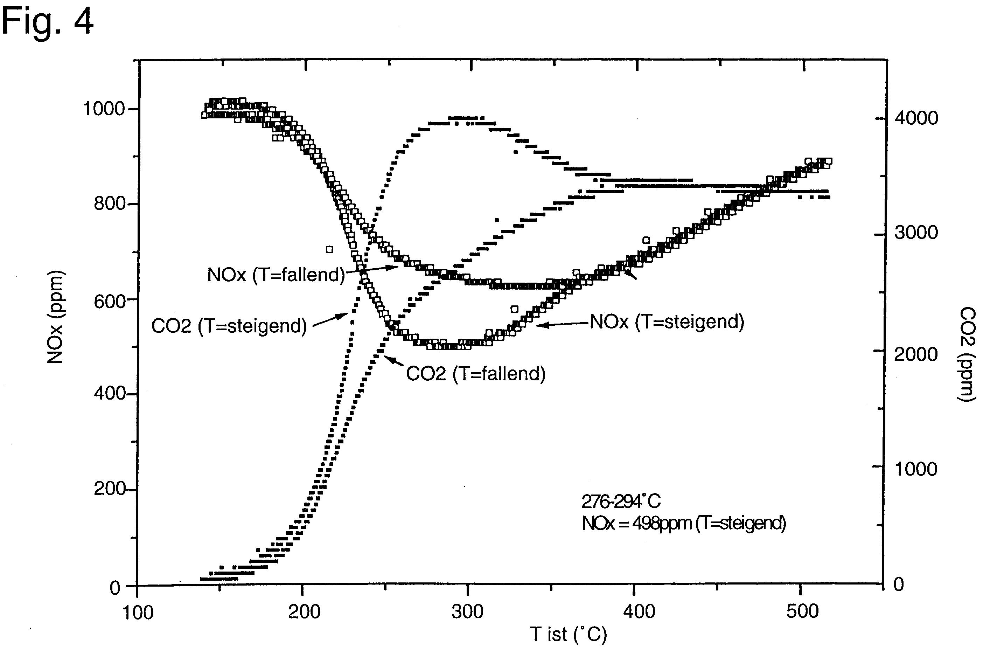

In Figur 4 (Daim 25 257/4) ist anhand des mit Kupfer imprägnierten $CuAl_2O_4$-Spinells ein $NOx/CO_2$-Diagramm in Abhängigkeit der Temperatur dargestellt. Die Messung erfolgte sowohl bei zunehmender als auch bei abnehmender Temperatur, wobei die Umsetzung hinsichtlich CO und NOx eine Hysterese aufweist.

Zur Durchführung dieser Messung wurden 10 Gramm Split des Cu-imprägnierten $CuAl_2O_4$-Spinells in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe betrug etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wurde ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wurde die NO-Konzentration mit einem Gasdetektor gemessen, wobei vor der Detektion eventuell gebildetes $NO_2$ in einem Konverter zu dem Stickoxid NO reduziert wurde. Simultan wurde eine Oxidation von Kohlenwasserstoffen zu $CO_2$ durch Messung des $CO_2$-Gehalts durch den Gasdetektor beobachtet.

Das Ergebnis der Messung des Spinells ist in dem Diagramm gemäß Figur 4 dargestellt. Der Verlauf des NO- und des $CO_2$-Anteiles in ppm ist als Funktion der Temperatur aufgetragen, wobei die NOx-Konzentration (leere Quadrate) und die $CO_2$-Konzentration (volle Rechtecke) unterschiedlich gekennzeichnet sind. In dem Diagramm ist eine deutliche Abnahme der NOx(NO)-Konzentration mit zunehmender Temperatur erkennbar, die zwischen ca. 276 bis 294°C einen Tiefpunkt erreicht und anschließend wieder ansteigt. Für das Cu imprägnierten $CuAl_2O_4$ wird ab ca. 200 °C eine drastische Abnahme der NOx-Konzentration beobachtet, wobei gleichzeitig die Kohlenwasserstoffe zu $CO_2$ zersetzt werden, wie es sich an der Zunahme der $CO_2$-

Konzentration zeigt. Das Temperaturfenster, in dem eine Reduktion des NOx vorliegt, beträgt je nach Zusammensetzung des Materials zwischen 200 °C und 400 °C.

Da die Meßverfahren vergleichbar sind, wird bei den nachfolgenden Beispielen zur Vermeidung unnötiger Wiederholungen nur noch auf die sich ergebenden Unterschiede eingegangen.

Beispiel 2)

Als Spinell wird ein Magnesium/Kupfer/Aluminium-Spinell, insbesondere der Zusammensetzung $Mg_{0.5}Cu_{0.5}Al_2O_4$ verwandt. Die Herstellung des Spinells erfolgt günstigerweise analog einem Verfahren, wie es aus der DE 43 01 4709 A1 bekannt ist.

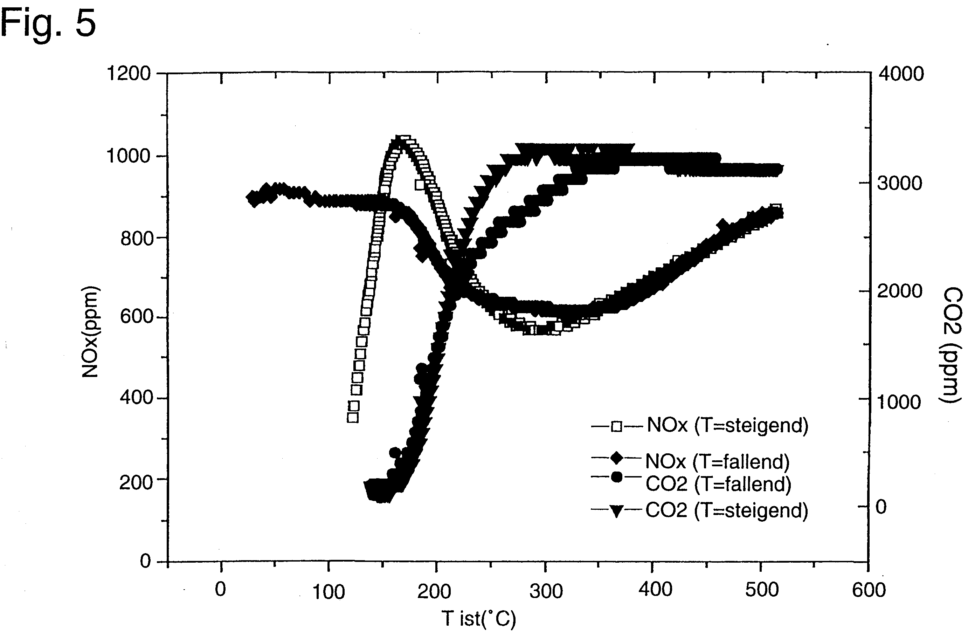

Der Verlauf des NO-Anteiles in ppm ist als Diagramm in Figur 5 als Funktion der Temperatur dargestellt, wobei sich eine deutliche Abnahme der NO-Konzentration mit zunehmender Temperatur erkennen läßt, die bei ca. 320 °C einen Tiefpunkt erreicht.

Beispiel 3)

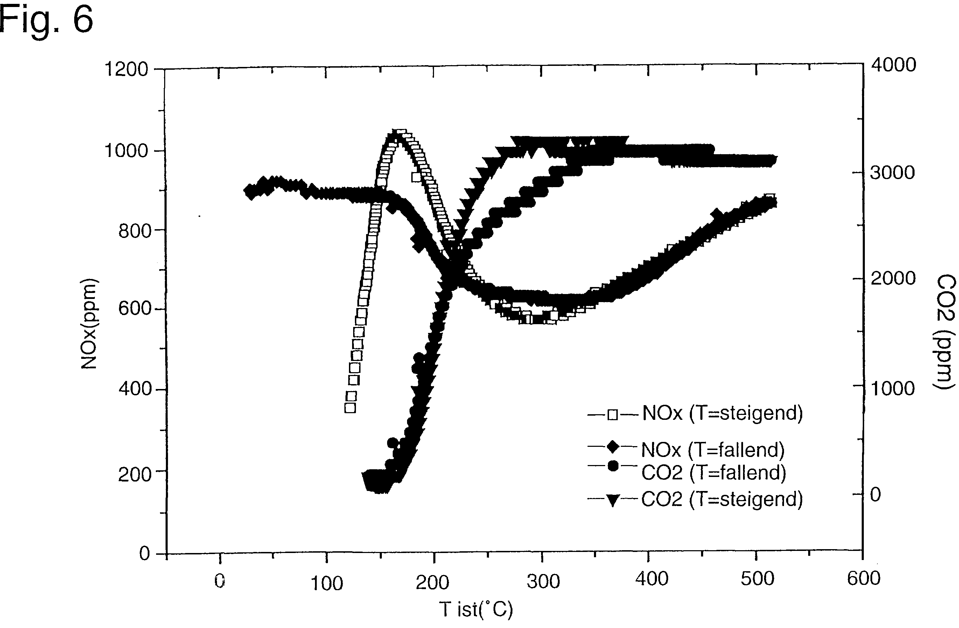

Als Spinell wird ein eine Spinellstruktur aufweisendes Gemenge der Zusammensetzung 20 % ZnO, 16% CuO, und 64 % $Al_2O_3$ verwandt, in den folgenden Beispielen 3 bis 7, zugehörige Figuren 6 bis 10, vereinfachend $ZnCuAl_2O_4$-Spinell genannt, der mit 1,6 Gew.-% $CeO_2$ imprägniert_ist.

Das Ergebnis der Messung des $ZnCuAl_2O_4$-Spinells gemäß Beispiel 3 ist in Figur 6 in einem Diagramm dargestellt. Der Verlauf des NO- und des $CO_2$-Anteils in ppm ist als Funktion der Temperatur aufgetragen, wobei die NOx-Konzentration und die $CO_2$-Konzentration unterschiedlich gekennzeichnet sind. In dem Diagramm ist eine deutliche Abnahme der NOx(NO)-Konzentration mit zunehmender Temperatur erkennbar, die bei ca. 430 °C einen Tiefpunkt erreicht und anschließend wieder ansteigt. Für das $ZnCuAl_2O_4$-Spinell + 1,6 Gew.-% $CeO_2$ wird ab ca. 150 °C eine drastische Abnahme der NOx-Konzentration beobachtet, wobei gleichzeitig die Kohlenwasserstoffe zu $CO_2$ zersetzt werden, wie es sich an der Zunahme der $CO_2$-Konzentration zeigt. Das Temperaturfenster, in dem eine Reduktion des NOx`s vorliegt, beträgt je nach Zusammensetzung des Materials zwischen 150 °C und 500 °C.

Beispiel 4)

Als Spinell wird der obige $ZnCuAl_2O_4$-Spinell verwandt, der zusätzlich 8 Gew.-% $CeO_2$ aufweist. Zur Herstellung dieses Spinells wird, ausgehend von einem $ZnCuAl_2O_4$-Spinell, der Spinell mit 8 Gew.-% $CeO_2$ imprägniert.

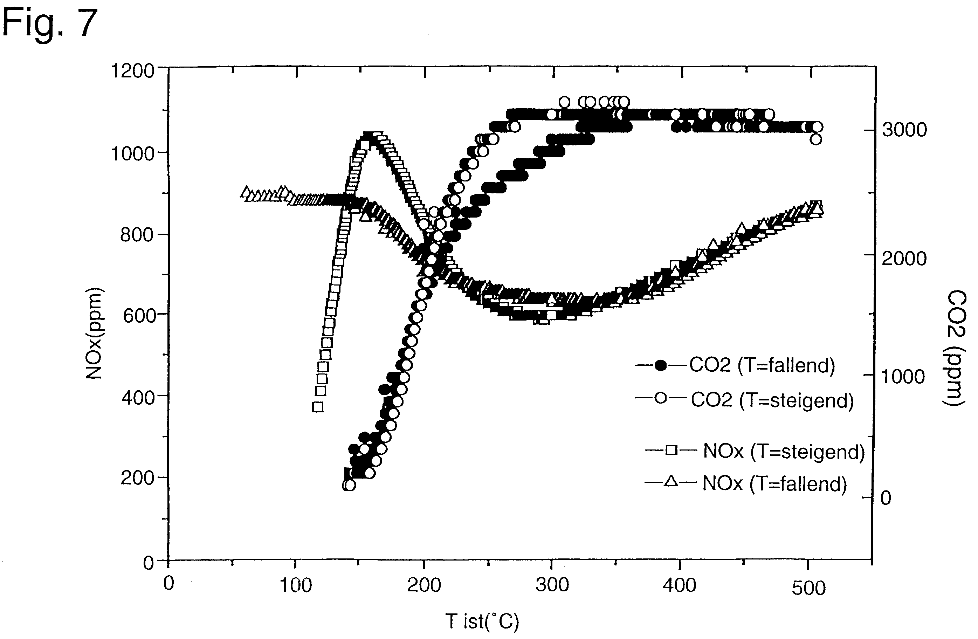

Das Ergebnis der Messung des mit 8 Gew.-% imprägnierten $ZnCuAl_2O_4$-Spinells gemäß Beispiel 4 ist in Figur 7 in einem Diagramm dargestellt, in dem eine deutliche Abnahme der NOx(NO)-Konzentration mit zunehmender Temperatur erkennbar ist, die bei ca. 300 °C einen Tiefpunkt erreicht und anschließend wieder ansteigt.

Für den $ZnCuAl_2O_4$-Spinell + 8 Gew.-% $CeO_2$ wird ab ca. 200 °C eine drastische Abnahme der NOx-Konzentration beobachtet, wobei gleichzeitig die Kohlenwasserstoffe zu $CO_2$ umgesetzt werden, wie es sich an der Zunahme der $CO_2$-Konzentration zeigt. Das Temperaturfenster, in dem eine Reduktion des NOx`s vorliegt, beträgt je nach Zusammensetzung des Materials zwischen 200 °C und 500 °C.

Beispiel 5)

Als Spinell wird das schon erwähnte $ZnCuAl_2O_4$-Spinell verwandt, das nunmehr mit den Oxiden von Wolfram, Vanadium und Titan vermischt ist. Das Gemisch weist zu 50 Gew.-% das $ZnCuAl_2O_4$-Spinell auf, wobei die restlichen 50 Gew.-% des Gemisches aus 5 Gew.-% $WO_3$, 3 Gew.-% $V_2O_5$ und 42 Gew.-% $TiO_2$ gebildet ist

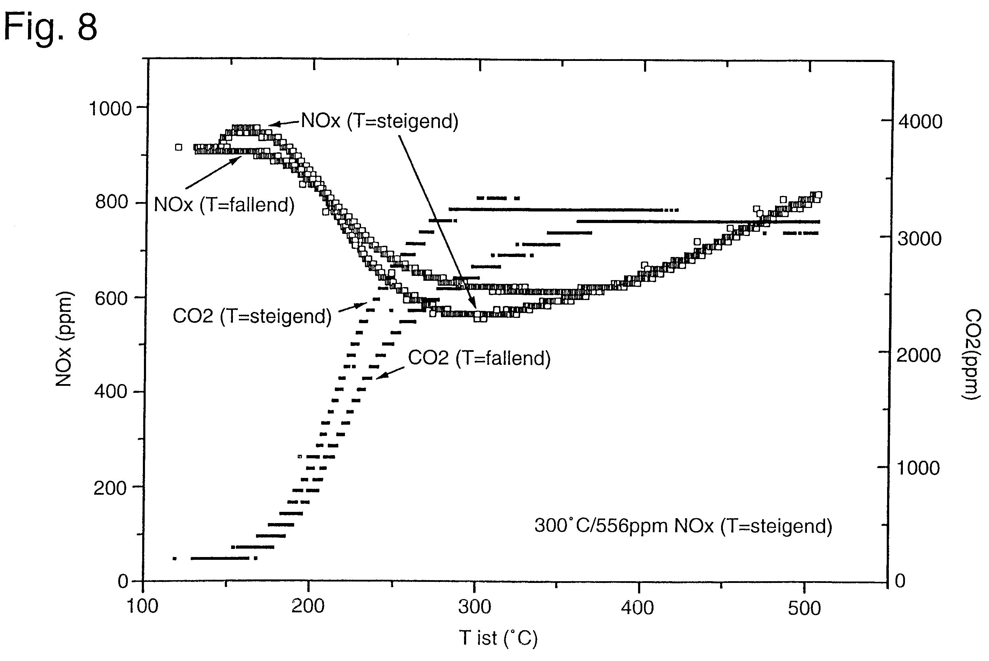

Das Ergebnis der Messung des Spinells gemäß Beispiel 5 ist in Figur 8 in einem Diagramm dargestellt, das eine deutliche Abnahme der NOx(NO)-Konzentration mit zunehmender Temperatur zeigt, die bei ca. 240 °C einen Tiefpunkt erreicht und anschließend wieder ansteigt.

Für das Gemisch wird ab ca. 150 °C eine drastische Abnahme der NOx-Konzentration beobachtet, wobei gleichzeitig die Kohlenwasserstoffe zu $CO_2$ zersetzt werden, wie es sich an der Zunahme der $CO_2$-Konzentration zeigt. Das Temperaturfenster, in dem eine Reduktion des NOx`s vorliegt, beträgt je nach Zusammensetzung des Materials zwischen 150 °C und 500 °C.

Beispiel 6)

Als Spinell wird der $ZnCuAl_2O_4$-Spinell der bekannten Zusammensetzung verwandt, der mit 0,1 % Vanadium imprägniert ist.

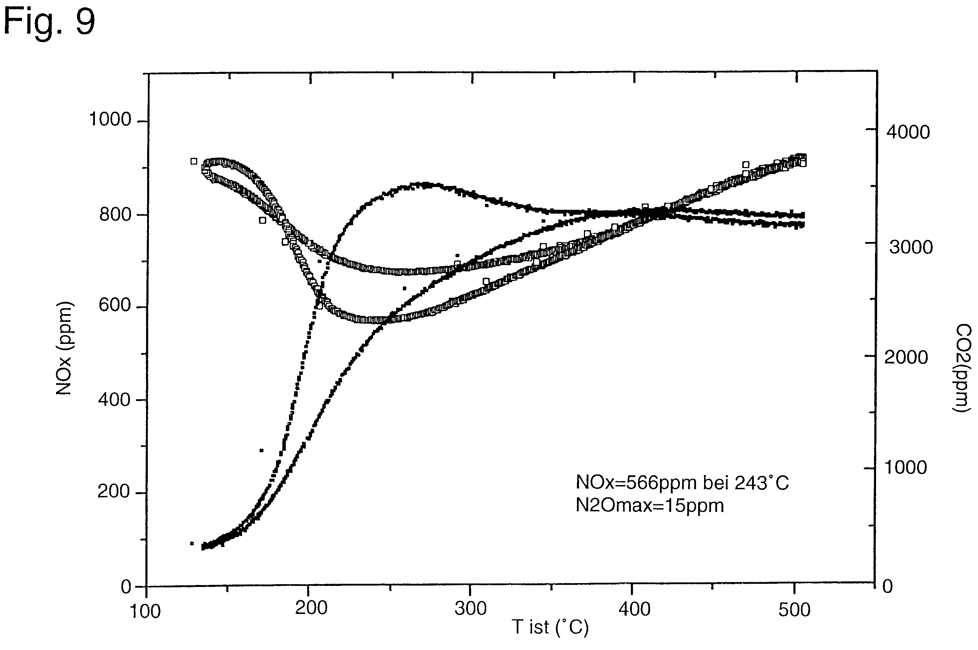

Das Ergebnis der Messung des Spinells gemäß Beispiel 6 ist in Figur 9 in einem Diagramm dargestellt, das eine deutliche Abnahme der NOx(NO)-Konzentration mit zunehmender Temperatur zeigt, die bei ca. 300 °C einen Tiefpunkt erreicht und anschließend wieder ansteigt.

Für den $ZnCuAl_2O_4$-Spinell + Vanadium wird ab ca. 170 °C eine drastische Abnahme der NOx-Konzentration beobachtet, wobei gleichzeitig die Kohlenwasserstoffe zu $CO_2$ zersetzt werden, wie es sich an der Zunahme der $CO_2$-Konzentration zeigt. Das Temperaturfenster, in dem eine Reduktion des NOx`s vorliegt, beträgt je nach Zusammensetzung des Materials zwischen 170 °C und 500 °C.

Beispiel 7)

Als Spinell wird abermals der $ZnCuAl_2O_4$-Spinell

verwandt, der mit 0.5% Palladium imprägniert ist.

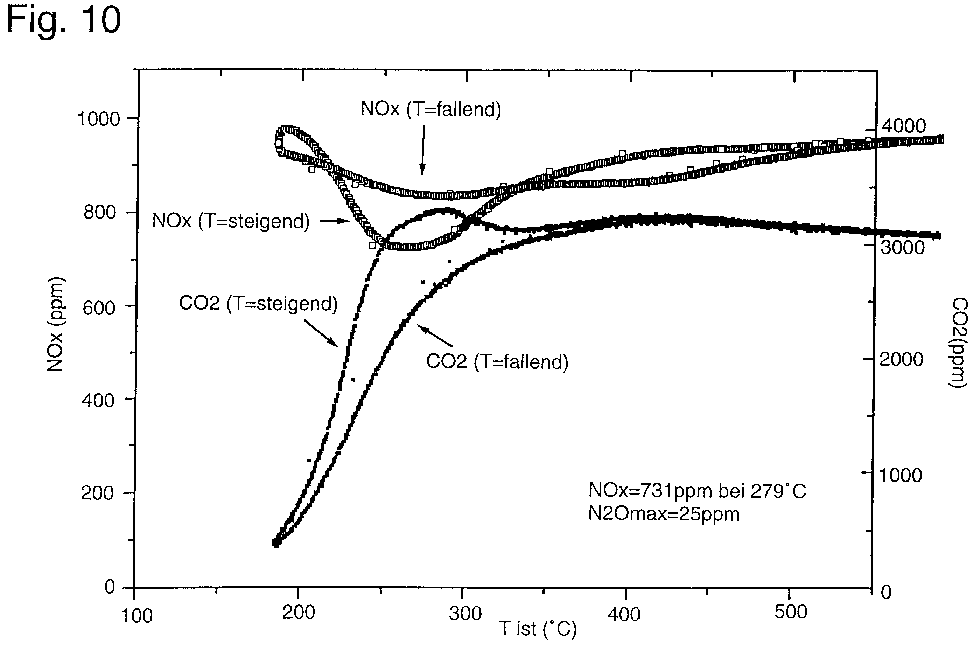

Das Ergebnis der Messung des Spinells gemäß Beispiel 5 ist in Figur 10 in einem Diagramm dargestellt, das eine deutliche Abnahme der NOx(NO)-Konzentration mit zunehmender Temperatur zeigt, die bei ca. 280 °C einen Tiefpunkt erreicht und anschließend wieder ansteigt.

Für den $ZnCuAl_2O_4$-Spinell + 0.5 Gew.-% Pd wird ab ca. 180 °C eine drastische Abnahme der NOx-Konzentration beobachtet, wobei gleichzeitig die Kohlenwasserstoffe zu $CO_2$ zersetzt werden, wie es sich an der Zunahme der $CO_2$-Konzentration zeigt. Das Temperaturfenster, in dem eine Reduktion des NOx`s vorliegt, beträgt je nach Zusammensetzung des Materials zwischen 180 °C und 500 °C.

Bei allen Beispielen liegt das angegebene Temperaturintervall günstigerweise bei etwa den Temperaturen, die in einem Abgasstrang eines Auspuffes einer Brennkraftmaschine auftreten können.

Da die Spinelle bereits bei relativ niedrigen Temperaturen ein gutes Ansprechverhalten aufweist, und ferner unterhalb dieser Ansprechtemperatur ein gutes Speicherverhalten von Kohlenwasserstoffen aufweisen, sind sie insbesondere zum Einsatz als HC und/oder CO und/oder NOx-Abgaskatalysator bei stöchiometrisch betriebenen Brennkraftmaschinen als Trägermaterial bei sogenannten 3-Wege-Katalysatoren geeignet.

Weitere Untersuchungen an diesem Katalysator ergaben zusätzlich noch eine hohe Beständigkeit gegenüber NOx, $H_2O$, $CO_2$ und $H_2O$.

**Patentansprüche**

1. Verfahren zum Betreiben einer Reinigungsanlage für Gase, insbesondere für Abgase von stöchiometrisch betriebenen Ottomotoren, bei welchem Verfahren ein einen Katalysator aufweisender Filterkörper dem Gasstrom ausgesetzt und Schadstoffe katalytisch umgesetzt werden,
**dadurch gekennzeichnet,**
daß bei tiefen Temperaturen unterhalb einer Ansprechtemperatur der Reinigungsanlage, insbesondere unterhalb 200 °C, bevorzugt unterhalb 150 °C, im Gas vorliegende Kohlenwasserstoffe vom Filterkörper (2) zumindest teilweise zwischengespeichert werden und daß diese oberhalb der Ansprechtemperatur wieder freigesetzt und Schadstoffe unter Zuhilfenahme des Trägermaterials des Filterkörpers (2) katalytisch umgewandelt werden.

2. Verfahren nach Anspruch 1,
**dadurch gekennzeichnet,**
daß als Reduktionsmittel Kohlenwasserstoffe und/oder Kohlenmonoxid verwendet werden.

3. Verfahren nach Anspruch 1,
**dadurch gekennzeichnet,**
daß dem Gas vor oder im Bereich des Filterkörpers (2) Reduktionsmittel, bevorzugt Kohlenwasserstoffe, beigegeben werden.

4. Verfahren nach Anspruch 1,
**dadurch gekennzeichnet,**
daß die gespeicherten Kohlenwasserstoffe oberhalb der Ansprechtemperatur vom Trägermaterial des Filterkörpers (2) abgegeben und als Reduktionsmittel verwendet werden.

5. Verfahren nach Anspruch 1,
**dadurch gekennzeichnet,**
daß die gespeicherten Kohlenwasserstoffe oberhalb der Ansprechtemperatur vom Trägermaterial des Filterkörpers (2) abgegeben und als Reduktionsmittel verwendet werden.

6. Reinigungsanlage mit einem einen Katalysator aufweisenden Filterkörper insbesondere für stöchiometrisch betriebene Ottomotoren, welcher Filterkörper im Abgasstrom des Motors angeordnet ist,
**dadurch gekennzeichnet,**
daß der Filterkörper (2) aus einem Trägermaterial gefertigt ist, das bei Temperaturen unterhalb der Ansprechtemperatur der Reinigungsanlage von wenigstens 200 °C, insbesondere unterhalb 150 °C mindestens 20 Volumen-%, bevorzugt mindestens 50 Volumen-% der Kohlenwasserstoffe speichert und daß das Trägermaterial zumindest unter Zuhilfenahme eines Reduktionsmittels, vorzugsweise von Kohlenwasserstoff und/oder Kohlenmonoxid, hinsichtlich der Schadstoffe katalytisch reduzierend wirksam ist.

7. Reinigungsanlage nach Anspruch 6,
**dadurch gekennzeichnet,**
daß das Trägermaterial des Filterkörpers (2) ein Katalysator der allgemeinen chemischen Formel $A_aB_bO_4$ ist, wobei A und B Metalle sind, daß der Katalysator zumindest mikroskopisch eine kristallische oder kristallähnliche kubische Gitterstruktur mit flächenzentriert angeordneten Sauerstoffionen und tetraedrischen und oktaedrischen Lücken aufweist, in welchen tetraedrischen Lücken die A-Teilchen und bis zu 50% der B-Teilchen und in welchen oktaedrischen Lücken die restlichen der B-Teilchen angeordnet sind, wobei gilt $a + b \leq 3$ und $a, b > 0$.

8. Reinigungsanlage nach Anspruch 6,
**dadurch gekennzeichnet,**
daß das Trägermaterial des Filterkörpers (2) eine katalysisch aktive und unterstöchiometrische Zusammensetzung der allgemeinen chemischen Formel $A_{a(1-x)}B_bO_4$ in einer $B_bO_3$ Matrix ist, daß die Zusammensetzung ein Spinell oder daß sie spinellartig ist, und daß die Zusammensetzung im Röntgenspektrum charakteristische Spinellinien aufweist, wobei gilt $a + b < 3$, mit $a, b > 0$ und $0 \leq x < 1$.

9. Reinigungsanlage nach Anspruch 7 oder 8, **dadurch gekennzeichnet,** daß die A-Teilchen ein, vorzugsweise mehrere Elemente der A-Gruppe Mg, Ca, Mn, Fe, Ni, Co Cu, Zn, Sn und Ti ist und daß die B-Teilchen ein, vorzugsweise mehrere Elemente der B-Gruppe Al, Ga, In, Co, Fe, Cr, Mn, Cu, Zn, Sn, Ti und Ni ist, wobei für A- und B-Teilchen der Ausschlußgruppe Mn, Fe und Co die jeweils verwendeten A- und B-Teilchen ungleich sind.

10. Reinigungsanlage nach Anspruch 7 oder 8, **dadurch gekennzeichnet,** daß der Katalysator ein Material der chemischen Formel $A1_{a1(1-x)}A2_{a2(1-x)}B_bO_4$ ist, wobei die A1- und die A2-Teilchen Teilchen der A-Gruppe sind, wobei gilt $a1 + a2 + b \leq 3$ mit $a1, a2, b > 0$ und $0 \leq x < 1$.

11. Reinigungsanlage nach Anspruch 7 oder 8, **dadurch gekennzeichnet,** daß der Katalysator ein Material der chemischen Formel $A1_{a1(1-x)}A2_{a2(1-x)}B_2O_4$ ist, wobei die A1- und die A2-Teilchen Teilchen der A-Gruppe sind, wobei gilt $a1 + a2 \leq 1$ mit $a1, a2 > 0$ und $0 \leq x < 1$.

12. Reinigungsanlage nach Anspruch 7 oder 8, **dadurch gekennzeichnet,** daß der Katalysators ein Material der chemischen Formel $A1_{0.5(1-x)}A2_{0.5(1-x)}B_2O_4$ ist, wobei gilt $0 \leq x < 1$.

13. Reinigungsanlage nach Anspruch 6, **dadurch gekennzeichnet,** daß das der Filterkörper (2) als Heterogenkatalysator ausgebildet ist, und daß das Trägermaterial des Filterkörpers (2) ein oder mehrere katalytisch aktive Elemente wie Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide aufweist.

Fig. 1

Fig. 2

# Fig. 3

Fig. 4

EP 0 779 095 A1

Fig. 5

Fig. 6

Fig. 7

## Fig. 8

EP 0 779 095 A1

# Fig. 9

NOx=566ppm bei 243°C
N2Omax=15ppm

EP 0 779 095 A1

# Fig. 10

NOx (T=fallend)

NOx (T=steigend)

CO2 (T=steigend)

CO2 (T=fallend)

NOx=731ppm bei 279°C
N2Omax=25ppm

NOx (ppm)

CO2(ppm)

T ist (°C)

EP 0 779 095 A1

Europäisches
Patentamt

## EUROPÄISCHER RECHERCHENBERICHT

Nummer der Anmeldung

EP 96 11 7579

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 37 29 683 A (MOTOTECH MOTOREN UMWELTSCHUTZ) 30.März 1989 <br> * Spalte 3, Zeile 56 - Spalte 4, Zeile 8 * <br> * Spalte 5, Zeile 14 - Zeile 45; Ansprüche 1-16 * | 1,2, 4-10,13 | B01D53/94 <br> B01J23/00 |
| Y | | 3,11,12 | |
| | --- | | |
| X | US 5 078 979 A (DUNNE STEPHEN R) 7.Januar 1992 <br> * Spalte 3, Zeile 47 - Spalte 8, Zeile 14 * | 1,2,4-6, 13 | |
| | --- | | |
| X | WO 86 04525 A (KOCH CHRISTIAN) 14.August 1986 <br> * Seite 2, Zeile 8 - Seite 3, Zeile 25 * <br> * Seite 6, Zeile 7 - Zeile 12; Ansprüche 17-19 * | 1,2,4-9, 13 | |
| | --- | | |
| Y | EP 0 676 232 A (RHONE POULENC CHIMIE) 11.Oktober 1995 <br> * das ganze Dokument * | 3,11,12 | |
| | --- | | **RECHERCHIERTE SACHGEBIETE (Int.Cl.6)** |
| A | EP 0 494 388 A (AGENCY IND SCIENCE TECHN ;PETROLEUM ENERGY CENTER FOUND (JP); COSM) 15.Juli 1992 <br> * Seite 4, Zeile 49 - Seite 7, Zeile 55; Ansprüche 1-17 * | 1-9,13 | B01D <br> B01J |
| | --- | | |
| A | EP 0 210 681 A (SHELL INT RESEARCH) 4.Februar 1987 <br> * Ansprüche 1-17; Tabellen 1,2 * | 1,2,4-12 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 21.März 1997 | Eijkenboom, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................
& : Mitglied der gleichen Patentfamilie, übereinstimmendes Dokument

EPO FORM 1503 03.82 (P04C03)